# EUROPEAN PATENT APPLICATION

(11) **EP 2 109 014 A1**
(43) Date of publication of application: **14.10.2009**
(21) Application number: 09157440.0
(22) Date of filing: 06.04.2009
(51) Int. Cl.: G03H 1/02

(54) **Improved OVD containing device**

(30) Priority: 08.04.2008 US 123396 P
(71) Applicant: JDS Uniphase Corporation, Milpitas, CA 95035 (US)
(72) Inventor: O'Boyle, Lily, Cream Ridge, NJ 08514 (US); Zambory, Garth, Burke, VA 22015 (US); D'Amato, Salvatore F., Mocksville, NC 27028 (US)
(74) Representative: Walker, Stephen

(57) **Abstract**

A holographic overlay is provided, including: a polycarbonate substrate having a first side and a second side, a diffractive structure cast upon the first side of the polycarbonate substrate, and a reflection-enhancing coating on at least a part of the diffractive structure; wherein the second side of the polycarbonate substrate provides a substantially flat external surface of the overlay capable of fusing to a conforming surface in the presence of heat and pressure without an adhesive. Optionally, the overlay is laser-engraved so as to form ablated voids in the metal coating and carbonize the laser engravable polycarbonate under the ablated voids. According to another aspect of the invention, a metal coating on a hologram is made substantially transparent using a laser to form a transparent portion of a hologram. Optionally, it is done after applying the hologram to an object such as a card, a document, etc., in register with underlying information to ensure its visibility and continuity of the hologram.

## Description

### TECHNICAL FIELD

The present invention relates to the optical arts of holography and diffraction gratings, and, more particularly, to use of holograms in identification or transaction cards, passports, and other objects.

### BACKGROUND OF THE INVENTION

Counterfeiting and altering of security documents are one of civilization's oldest problems. Developing of anti-counterfeiting measures is an on-going quest. A quarter of a century ago the financial card industry faced counterfeit fraud losses that were escalating at such an alarming rate the banking industry was forced to take measures to increase the security of the design and manufacturing of the card itself. Several measures were considered, but it was the introduction of holograms that stemmed the growth of counterfeit fraud by reducing it by 75 percent within three years after the introduction of the hologram.

Today, wide spread availability of holographic technology, digital printing, data intercept techniques, the spread of card manufacturing knowledge over the internet has made the task of securing ID cards, credit cards and documents more challenging than ever. Optically variable devices (OVDs), such as diffractive structures including holograms, continue to be effective anti-counterfeiting devices. Their authenticity can be easily confirmed at low (visual), medium (simple tool) and high (forensic) levels.

Conventionally, a holographic film or foil is laminated to, for example, a credit card for providing an appealing visual effect and additional security. However, such holograms can be peeled of the genuine cards and transferred to counterfeit ones.

Different methods are proposed for fighting this counterfeiting technique, for example, calculating an offset between the holographic image and magnetic record on the card.

The object of the invention is to provide an improved optically variable device which would be very difficult, if not impossible, to peel from and re-apply to transaction cards, documents, and other articles.

Another object of the invention is to provide a resilient transaction or ID card with improved optical properties.

### SUMMARY OF THE INVENTION

In accordance with the invention, an overlay is provided, including: a polycarbonate substrate having a first side and a second side, a cast diffractive structure supported by the first side of the polycarbonate substrate, and a reflection-enhancing coating on at least a part of the diffractive structure; wherein the second side of the polycarbonate substrate provides a substantially flat external surface of the overlay capable of fusing to a conforming surface in the presence of heat and pressure without an adhesive.

In accordance with one aspect of the invention, the overlay is laser-engraved so as to form ablated voids in the metal coating and carbonize the laser engravable polycarbonate under the ablated voids.

In accordance with another aspect of the invention, wherein the overlay is fused to an object in the absence of an adhesive therebetween.

According to yet another aspect of the invention, one or more regions of a metal coating on a hologram are made substantially transparent using a laser to form one or more transparent portions of a hologram. In one embodiment, it is done after applying the hologram to an object such as a card, a document, etc., in register with underlying information to ensure its visibility and continuity of the hologram.

According to one more aspect of the invention, a holographic overlay is provided, including one or more metalized holographic regions and one or more transparent holographic regions, wherein the transparent holographic regions ensure visibility of underlying information and hologram continuity and wherein all said regions are recognizable by the unaided human eye and preferably have a diameter of greater than 2 mm. In one embodiment, the transparent holographic regions are laser-altered regions.

### BRIEF DESCRIPTION OF THE DRAWINGS

Figure 1A is a set of micrographs of a hologram hot-stamped onto a PVC substrate;

Figure 1B is a set of micrographs of a hologram hot-stamped onto a PC substrate;

Figure 2 is a cross sectional view of an overlay;

Figure 3A is a cross sectional view of an overlay with a metal layer;

Figure 3B is a cross sectional view of an overlay with an HRI layer;

Figure 3C is a cross sectional view of an overlay with a discontinuous metal layer;

Figure 3D is a cross sectional view of an overlay with an HRI layer and a discontinuous metal layer;

Figure 3E is a cross sectional view of an overlay with a discontinuous metal layer and an HRI layer;

Figure 3F is a cross sectional view of an overlay with a high refractive index polymer;

Figure 4 is a cross sectional view of an overlay with a protective top coat;

Figure 5 is a plan view of a laser engraved card;

Figure 6 is a cross sectional view of the card shown in Fig.5

Figure 7 is a cross sectional view of a card in accordance with one embodiment of the invention;

Figure 8 is a cross sectional view of a card in accordance with one embodiment of the invention;

Figure 9A is a holographic overlay with a metalized hologram; and

Figure 9B is a card with the overlay shown in Fig. 9A.

### DETAILED DESCRIPTION

The present invention will be apparent from the following detailed description, which proceeds with reference to the accompanying drawings, wherein same numerals refer to same elements.

The hot stamping of a hologram onto polyvinyl chloride (PVC), Polyethylene Tetrapthalate Glycol (PETG) or other plastic substrate is a standard method used to attach an OVD to ID or financial transaction card. Lately, polycarbonate (PC) became a material of choice for high-end identification (ID) and transaction cards, in particularly, because of its high durability and environmentally friendly nature. However, it has been discovered that a hologram hot-stamped to a PC substrate, tends to obliterate and crack in subsequent encapsulation, lamination and press finishing, thus significantly degrading optical quality.

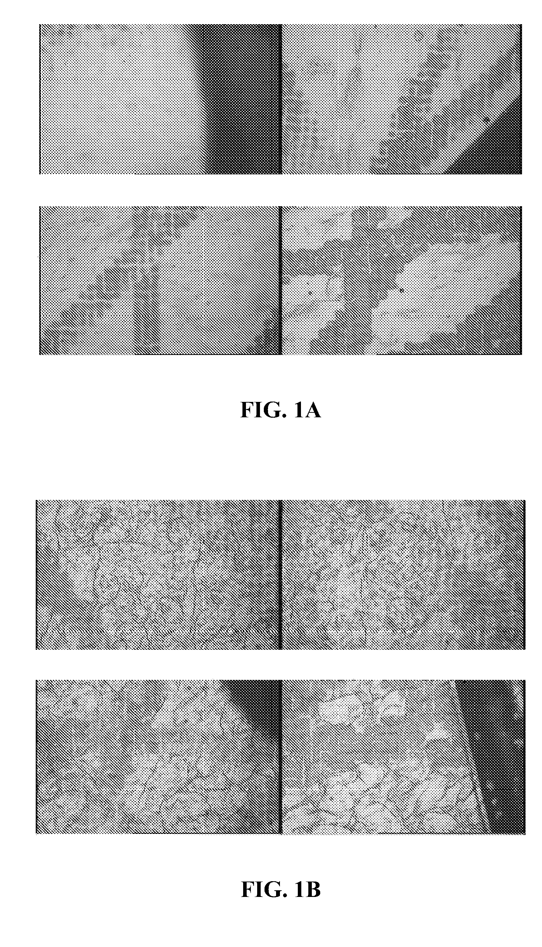

By way of example, Fig. 1A shows hot-stamped and laminated holograms on PVC cards; the quality of the holograms is good despite some minor defects. In contrast, holograms hot-stamped or laminated onto PC cards using the same technique have significantly lower quality as shown in Fig. 1B. The micrographs shown in Figs. 1A and 1B are taken with 20 X objective of a microscope. They illustrate that a 2 micron thick, hot stamp hologram base layer attached to the PC via transfer, can't sustain the vigorous lamination (385∼ 400 f @ 15∼25 min @ 250∼ 350 PSI) and embedding process; therefore the hologram structure is distorted.

This is primarily due to the fact that the PVC card lamination process requires lower heat and pressure therefore less distortion to the hologram results. Notwithstanding, since PC is the preferred substrate for environmental, security and longevity requirements, this invention provides a solution which avoids obliteration of the hologram and lessens damages to image quality and which does not require the use of a hot stamp or transfer foil by using a direct forming approach on a selected substrate such as PC.

In accordance with the invention, a diffractive structure, for example a hologram or non-holographic optical variable device, is formed directly on a polymeric film substrate using a conventional casting process. The polymeric film is preferably a polycarbonate substrate. Other materials such as polyethylene terephthalate (PET) may be used. Alternatively, an intermediate layer, for example printed indicia, may be present between the substrate and the cast hologram.

During the casting step, a liquid resin, such as high molecular weight aliphatic polyurethane base polymer which bonds well to PC but not subjected to thermo distortion under extreme heat, or Isopropyl Acrylate and Benzo Phonon base photo initiator, is trapped between the surface relief pattern of a sub-master and a plastic substrate while the resin is hardened by actinic radiation or other curing technique. When the sub-master and substrate are separated, a cast surface relief pattern remains attached to the plastic substrate.

The direct casting of the holographic image with UV curing provides for a tough holographic image with high integrity which does not deform under high heat and pressure. The cast diffractive structure created by the method has a better adhesion to the film carrier which will not distort, deform and degrade from the heat laminating encapsulation or lamination process. The present invention produces a highly secure OVD device highly suitable for ID cards, financial cards, high value documents or labels combining a partial see-through OVD with laser engraved identifiers.

An alternative and less preferable method of forming a hologram is an embossing technique wherein a sub-master is urged against thin plastic film under sufficient heat and pressure to transfer the surface relief pattern into a surface of the film. Embossed holograms are less desirable than cast hologram because the conventional emboss hologram base is a thermo compliant material; thus the image is formed by applying pressure only. As a result it is subject to distortion in a vigorous lamination or embedding process required for PC card manufacturing.

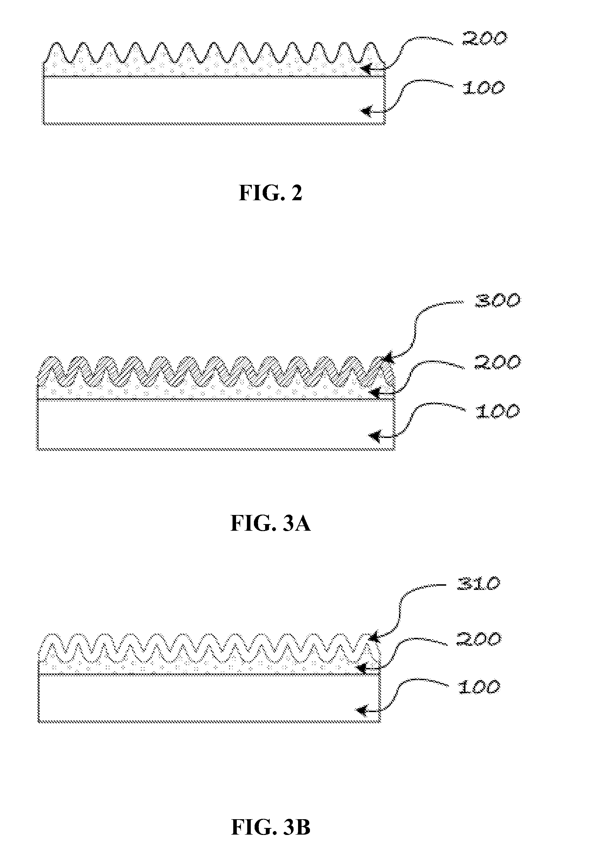

With reference to Fig. 2, the OVD /hologram 200 is formed directly on a polymer substrate 100, preferably a transparent substrate, and more preferably, a polycarbonate substrate. The casting process, such as described in U.S. Patent No. 5,142,383 to Mallik incorporated herein by reference, provides a most faithful replication, that is cross linked multifunction polymer with an inseparable bond to the polymer carrier. Forming the OVD directly on the carrier substrate 100 eliminates an industry standard hot stamping process, which is a time consuming process and, very often, is a bottleneck in manufacturing. The prospect of elimination of the hot stamping process is very attractive to card manufacturers.

Advantageously, the hologram of this invention cast directly to the polycarbonate substrate has superior bond to polycarbonate and can sustain harsh lamination, embedding or calendaring process without optical degradation.

A reflection-enhancing coating is then applied on top of the diffractive structure. In one embodiment, the reflection-enhancing coating is a metal coating 300 shown in Fig. 3A. Aluminum is the most commonly used material for the reflective coating 300. Other metals, such as Chrome, Gold, or Silver, may be used as well. In another embodiment, the reflection-enhancing coating includes a material with a high refractive index (HRI) 310 (Fig. 3B), such as ZnS, TiO2, ZrO2. In yet another embodiment, both the metal coating 300 and the HRI coating 310 are present on the surface of the diffractive structure. Other embodiments include using a dielectric coating, organic/ inorganic reflective pigment, metal flakes and color shifting stacks. Evaporation is the most commonly used method; however, the reflection-enhancing coating may be applied through sputtering, printing, etc.

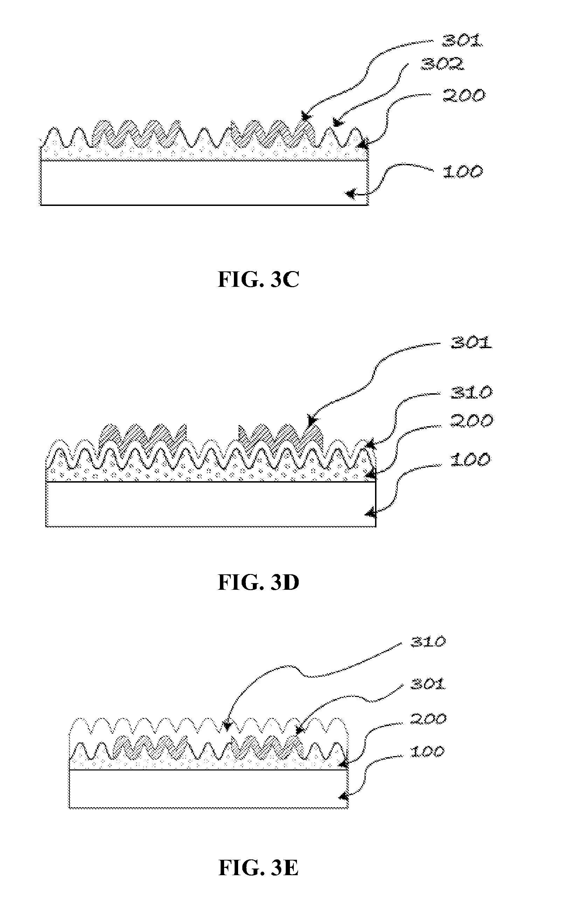

The reflection-enhancing coating does not necessarily cover the entire diffractive structure. Fig. 3C shows a patterned metal coating which has one or more metal regions 301 on the OVD and one or more regions 302 void of metal.

The patterned metal coating may be formed by providing a continuous metal coating in regions 301 and 302, then printing a resist material on the a continuous metal coating in regions 301 and washing the metal out where is not protected by the resist coat. Another way to form the patterned metal coating is to print removable or slick material on regions 302 prior to the metalizing step, so that the metal will be deposited only onto regions 301. Further, the masking technique or printing of metal flakes may be used.

Figs. 3D and 3E illustrate combinations of the metal coating in the form of metalized regions 301 and the HRI layer 310. In Fig. 3D, the patterned metal coating 301 is disposed on top of the HRI layer 310; and *vice versa* in Fig. 3E.

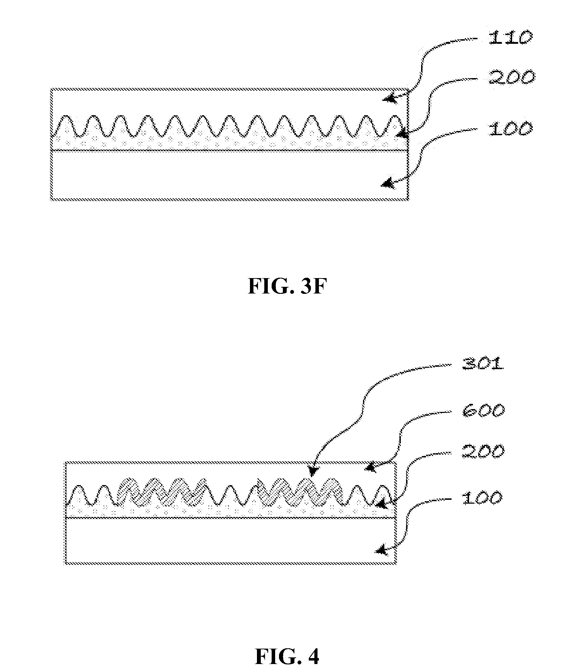

The reflection-enhancing coating may be a coating of a high index polymer 110 as shown in Fig. 3F.

In one embodiment, the reflection-enhancing coating is a color-shifting coating, formed by a layered structure including a reflector layer, such as an aluminum layer, a spacer layer, for example a layer of MgF₂, and an absorber layer, such as a chromium layer. Alternatively, the layered structure is formed by alternating high- and low- refractive index materials, which essentially require a refractive index difference of at least 0.1. The reflection-enhancing coating may be formed of ink containing color-shifting flakes.

Optionally, a protective coating may be placed on top of the reflection-enhancing coating. Fig. 4 shows the protective coating 600 supported by the structure shown in Fig. 3C. Similarly, the protective coating 600 may be added to any of the structures shown in Figs. 3A-3F.

In accordance with the invention, a holographic overlay, such as overlays described above with reference to Figs. 1-4, is designed so as to be fused to a conforming surface in the presence of heat and pressure without any adhesive. Fusing is the technique used to join pieces together by partly melting under high temperature conditions. The unique aspect of the invention is that the OVD bearing polycarbonate permits the fusion (bond without an adhesive) to another substrate, such as PC or Teslin, while the cast hologram is not distorted in the process.

For fusing to a flat surface of an ID or transaction card, the second side of the polycarbonate substrate, the side opposite to the hologram-supporting first side of the substrate, has a substantially flat external surface, that is to say bumps on the surface of the card are not higher than 125 microns and, preferably, in order to avoid imperfections, not higher than 50 microns.

The PC to PC fusion bond is created by melting the surfaces and interlocking them at molecular level under pressure. By way of example, the back PC surface of the overlay is fused to a PC-based card applying the pressure of 275 PSI at 390F for duration of 20 min. No adhesive is required for the fusion process.

Optionally, the back of the polycarbonate substrate is treated to improve fusing to the conforming surface.

Preferably, the surface to which the overlay is fused is a PC surface. However, other materials are also suitable. Teslin® is a polyolefin based, highly micro porous structured synthetic paper; it is flexible and easy to print on. PVC is soft and meltable; it is bondable to PC under lamination. PET and PETG and PET/ PC blends are materials compatible to PC, especially PETG which has a copolymer amorphous property. Polystyrene is very thermo formable. The overlay may also be bonded to a paper surface coated with a special coating, or a synthetic paper surface.

In one embodiment of the invention, the surface to which the overlay is fused has a region coated with ink, or metal, or the like. This intermediate coating should cover a minor portion of the area where the overlay is bonded, so as to not decrease the bonding forces. An example of such coating is a photo or printed text and graphics on a credit card or a secure document.

Another way to provide personalized data, such as an alphanumeric pattern, a facial image, a fingerprint image, a barcode, or a logo, to an object is via laser engraving which creates ablated voids in the metal coating 300 or 301.

Preferably, the overlay, and/or the object to which the overlay is fused contain laser engravable polycarbonate, so that the laser engraving produces a visible black or dark color marking by carbonization of the PC material. Bayer ID 6-2, and Sabic HP92 are examples of the preferred laser engravable polycarbonates in the ID card industry, and there are other laser engravable polycarbonates becoming available.

The overlay's substrate 100 may be formed of the laser engravable polycarbonate, or have a layer of such material. The object to which the overlay is fused to may also contain of the laser engravable polycarbonate, so as to be engraved simultaneously with the overlay.

Once the metal 301 is removed by laser ablation, it is impossible to redeposit the reflective layer back onto the construction. The laser encoding is also permanent and irreversible. Depending on the laser wavelength, power, pulse energy/ frequency and focus location within the material, the laser engraving may result in material melting leaving raised features or fracturing on the surface that could leave plastic substrates showing no effect, or a covert effect invisible to naked eye or raised feature which gives tactile feel as an additional security feature. The merit of the various combinations of phenomenon offers a spectrum of options for security in a refined composite.

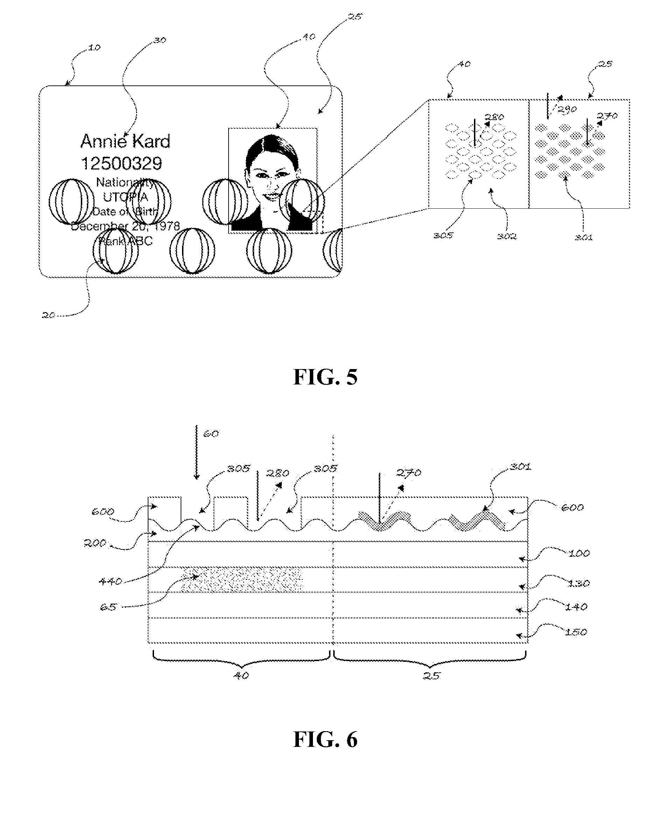

Fig. 5 shows a front surface of an ID card, whereas Figs. 6-8 show cross-sections of the card shown in Fig. 5 in accordance with different embodiments of the invention.

Fig. 5 illustrates an ID card which contains an OVD/hologram pattern 20, laser engraved personal data 30 and a laser engraved portrait 40. A metallized pattern 270 is formed by a plurality of metal dots 301 over the OVD 20. The area 302 between the metal dots 301 provides the see-through capability. The laser engraved regions 305 provide a transparent holographic image. The OVD continuity is preserved between the laser engraved and not engraved areas. The continuity of the OVD over the portrait area makes photo substitution extremely difficult and provides enhanced security.

Fig. 6 is a cross sectional view of the card shown in Fig. 5, in accordance to one embodiment thereof. In the laser engraved area, the metal is ablated to provide metal-less dots 305. Despite of the metal removal, the diffraction image 280 is visible due to the refractive index difference between the OVD polymer layer and the air, values of 1.5 and 1, respectively.

The OVD structure faces outward and is encapsulated with the protective coating 600 which is tightly bond to the polymeric OVD layer and endures wide range of chemicals and passes the ISO requirements. A laser beam 60 engraves the engravable layer 130 and ablates the discrete metal area 301, which results in a direct contact of the OVD polymer 200 with the air 440 at ablated voids 305. The carbonization 65 and the darkening effect of the PC material takes place within the polymer layer 65 where the personal data and portrait are located. The OVD containing overlay is fused to a printed core 140. There is a PC layer 150 on the outer surface of the card with an optional hard coat to enhance chemical and mechanical resistance to improve the card live.

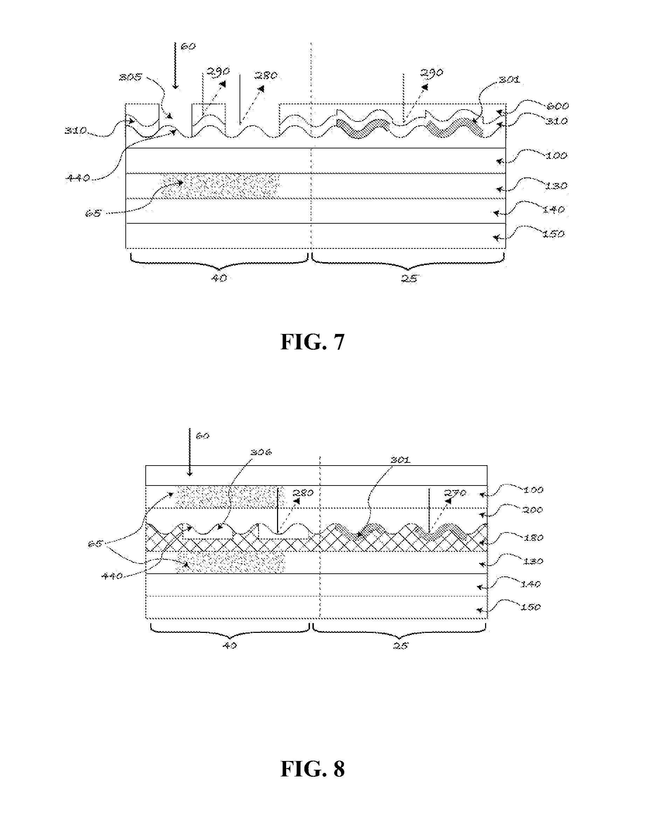

Fig. 7 illustrates a HRI layer 310 added to the card depicted in Fig 6. The ID card contains discontinuous metal regions 301 as well as a HRI reflective layer 310 over the diffractive structure. The combination ensures that the OVD/holographic effect remains highly visible throughout the entire card after laser engraving. The ablation removes metal from the dot regions 305 and consequentially reduces the OVD visibility. The HRI layer 310 remains because it is not removed by the laser. The HRI diffraction 290 makes the hologram visible over the laser engraved areas 40; the visual effect of the not engraved areas 25 is enhanced. The typical laser wavelength 1064 nm transmits through the HRI layer during laser engraving process without ablation of the HRI layer. This combination of the presence/absence of aluminum coupled with the HRI layer would be extremely difficult to simulate; it results in a highly secure laser engraved identity document. It is to be noted that the combination of the metal area and HRI area is not limited to the exact layered structure or orientation in the graph.

Combining demetalization along with HRI not only enhances the overt appearance of a hologram it provides for specific benefits, overt and covert, when laser engraving is used for personalization of the identity document.

Holograms are often used to protect personalized data on identity documents. HRI holograms are not inherently highly secure due to the fact that they can be produced by a large number of companies worldwide. Demetalized holograms are considered much more secure as there are fewer companies able to produce them. However when a demetalized hologram is used in conjunction with an identity document that is personalized with laser engraving, this personalization process ablates the remaining aluminum, thereby destroying the visual holographic effect.

In one embodiment a layer of polycarbonate with a holographic embossing applied as described above is then metalized and demetalized. Following the demetalization process, the entire substrate is coated with an HRI layer. Alternatively the HRI layer could be applied in selected areas only, such as those targeted for laser engraving personalization. Other security print may be applied to the top substrate, which is then combined with other layers of material to form an identity document, such as a card or a paper document. These other layers may have security print, or even some elements of personalization, for example applied using an ID card printer, prior to being joined with the top layer containing the holographic OVD. This document is then personalized through the use of a laser engraver.

In the pixel areas of darkness written by the laser engraver the aluminum remaining from the demetalization process will be ablated but the HRI layer will not be affected. White areas of the personalized document where the laser has not be used to write dark pixels will have any aluminum that was in place following the demetalization process remaining. As a result the observer will see a strong holographic effect provided by the combination of the demet and HRI effects, remaining over the personalized data, such as a facial image, following the completion of the laser engraving personalization. A detailed forensic analysis will show the absence of aluminum in areas written dark by the laser engraver but will also show remaining aluminum elements in areas not written dark by the laser engraver. This combination of the presence / absence of aluminum coupled with the HRI layer will be extremely difficult to simulate and results in a highly secure laser engraved identity document.

Combine demetalization and HRI or another coating to make the holographic effect remain highly visible following laser engraving while at the same time enhancing security by having some of the Al remain visible and detectable forensically following the personalization process.

This invention makes alternation, removal, reuse and replacement of the OVD and its encoded personal data extremely difficult. Any attempt of manipulation of the secure document would be easily detectable.

According to one aspect of the invention, a metal coating on a hologram is made substantially transparent using a laser; preferably it is done after applying the hologram to an object such as a card, a document, etc., in order to make underlying information visible and still covered with a transparent hologram which provides visual continuity between the laser engraved and not engraved area. This approach is illustrated in the embodiments shown in Figs. 7 and 8.

In one embodiment, a diffractive surface has a metal coating thereon in contact with an index-matching material which has an index of refraction close to the index of refraction of the diffractive structure; preferably the difference between the indices is less than 0.1 so as to make the diffractive effect invisible. Laser engraving makes a portion of the metal coating "disappear" whereby transforming a bright metalized hologram into a subtle transparent hologram by the material modification in the ablation process. The air to polymer interface has an index-differential of 0.5; the modification makes discrete metal regions visible and the surrounding index-matched area invisible.

Fig. 8 illustrates a card wherein an OVD bearing overlay is flipped and attached to the card substrate via an adhesive layer 180, however the effect described below does not depend on the orientation of the diffractive structure 200 in relation to the card substrate formed in this case of the layers 130, 140 and 150. The adhesive 180 is an index-matching material for the diffractive structure 200; they are divided with a metal layer in regions 301 and, initially, in regions 306; however the regions 306 are modified by the laser later. Ablation causes a chemical reaction between the metal and the adjacent material, and often a slight color change. In general, the laser modified regions are transparent and have an index differential therefore the laser-modified holograms are transparent and visible.

Preferably, the card has a laser engravable layer within at least a portion of the card. The laser engravable layer can be any of the PC layers as discussed above with reference to Figs 2-7.

When the laser beam 60 engraves the card, the beam modifies the discrete metal regions 306 and creates an interface 440. On the right half of the card shown in Fig. 8, the metal regions 301 serve as the reflection-enhancing coating and provide a bright metallized hologram. After the laser beam application to the left side of the card, instead of a bright metallized hologram one would see a not-readily noticeable, transparent hologram altered by the laser 60. The transparent hologram, with its reflection properties enhanced by the laser-altered regions 306, provides a visual effect similar to a HRI-coated hologram, such as one shown in Fig. 3B. In absence of a HRI layer, the left side of the card sown in Fig. 8 has the appearance of a HRI-coated hologram. However, a HRI layer can be included into the reflection-enhancing coating on the hologram of Fig. 8 the same way it is described with reference to Figs. 2-7. Similarly, all the features described above with reference to Figs. 2-7 may be included in the embodiment shown in Fig. 8.

The transparent diffractive structure created with the laser engraving is registered with the portrait 40 which provides visual appeal and additional security feature. The carbonization 65 and darkening effect of the PC material takes place within the polymer layer where the personal data and portrait are located, for example in the primary OVD layer 100, intermediate layer 130, or outer overlay 150.

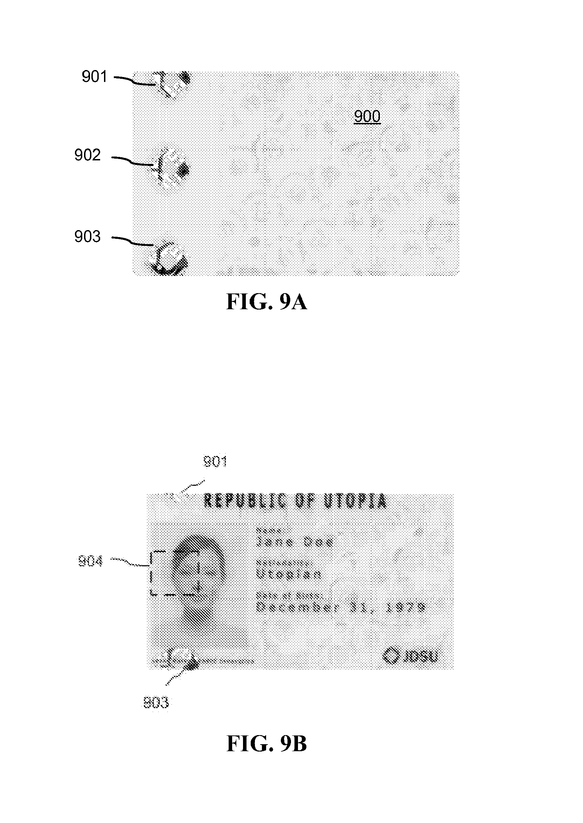

With reference to Figs. 9A and 9B, a holographic overlay 900 has a metalized hologram including metalized regions 901-903. After applying the overlay 900 to a card shown in Fig. 9B, the region 902 happened to hide a facial image; thus the region 902 was modified with a laser as described above so as to provide a transparent hologram in the region 904. The transparent hologram 904 is clearly visible in the real object and provides continuity to the holographic pattern formed by the regions 901, 904 and 903.

In the embodiment shown in Figs. 9A and 9B, the transparent holographic region 904 is created in register with underlying information to ensure its visibility and continuity of the hologram. After the laser engraving step, the holographic overlay 900 includes the metalized holographic regions 901 and 903 and the transparent holographic region 904, wherein the transparent holographic region 904 ensures visibility of the underlying image and continuity of the holographic pattern formed by the regions 901, 904 and 903, which are recognizable by the unaided human eye and preferably have a diameter of greater than 2 mm.

According to the invention, features described in one embodiment thereof may be incorporated into other embodiments.

## Claims

1. An overlay comprising:
a polycarbonate substrate having a first side and a second side,
a cast diffractive structure supported by the first side of the polycarbonate substrate, and
a reflection-enhancing coating on at least a part of the diffractive structure;
wherein the second side of the polycarbonate substrate provides a substantially flat external surface of the overlay capable of fusing to a conforming surface in the presence of heat and pressure without an adhesive.

2. The overlay as defined in claim 1, wherein the reflection-enhancing coating comprises a metal coating.

3. The overlay as defined in claim 2, wherein the metal coating is a patterned coating comprising one or more metal regions and one or more regions void of metal.

4. The overlay as defined in claim 2, wherein the reflection-enhancing coating comprises an HRI layer.

5. The overlay as defined in claim 2, wherein the substrate comprises a laser engravable polycarbonate.

6. The overlay as defined in claim 5, wherein the overlay is laser-engraved so as to form ablated voids in the metal coating and carbonize the laser engravable polycarbonate under the ablated voids.

7. The overlay of claim 6, wherein the ablated voids or a region adjacent thereto form at least a part of an alphanumeric pattern, a facial image, a fingerprint image, a barcode, and a logo.

8. The overlay as defined in claim 1, wherein the reflection-enhancing coating comprises an HRI layer or partial HRI layer.

9. The overlay as defined in claim 1, wherein the polycarbonate substrate comprises a laser engravable polycarbonate.

10. The overlay as defined in claim 1, further comprising a protective layer on the reflection-enhancing coating.

11. The overlay as defined in claim 1, wherein the second side of the polycarbonate substrate is treated to improve fusing to the conforming surface.

12. The overlay as defined in claim 1, wherein the reflection-enhancing coating is a color-shifting coating.

13. The overlay as defined in claim 1, wherein the diffractive structure is a cast hologram.

14. The overlay as defined in claim 1, wherein the overlay is fused to an object in the absence of an adhesive therebetween, and wherein the conforming surface of the object is one selected from the group consisting of: a polycarbonate surface, a Teslin® surface, a PVC surface, a PET surface, a PETG surface, a polystyrene surface, a coated paper surface, or a synthetic paper surface.

15. The overlay of claim 14, wherein the object comprises a laser engravable polycarbonate.

16. The overlay of claim 15, wherein the overlay and the object are laser engraved so as to selectively carbonize the laser engravable polycarbonate of the object.

17. The overlay as defined in claim 14, wherein the object is an identity document or a transaction card.
